# EUROPÄISCHE PATENTANMELDUNG

(11) **EP 4 592 048 A2**
(43) Veröffentlichungstag der Anmeldung: **30.07.2025**
(21) Anmeldenummer: 25181103.0
(22) Anmeldetag: 23.04.2024
(51) Int. Cl.: B29B 17/04

(54) **VERFAHREN ZUR GEWINNUNG VON REZYKLAT AUS DUROPLASTISCHEN WERKSTOFFEN, SOWIE VERWENDUNG EINES REZYKLATPULVERS ALS FÜLLSTOFF FÜR DIE HERSTELLUNG EINES DUROPLASTISCHEN FASERVERBUNDHALBZEUGS**

(30) Priorität: 24.04.2023 DE 102023110406
(62) Teilanmeldung aus: 24171801.4
(71) Anmelder: POLYTEC PLASTICS Germany GmbH & Co. KG, 49393 Lohne (DE)
(72) Erfinder: Rocha, Julian, 76703 Kraichtal-Gochsheim (DE); Nuber, Sebastian, 76703 Kraichtal-Gochsheim (DE); Wetzel, Andreas, 76703 Kraichtal-Gochsheim (DE)
(74) Vertreter: dompatent von Kreisler Selting Werner - Partnerschaft von Patent- und Rechtsanwälten mbB

(57) **Zusammenfassung**

Verfahren zur Gewinnung von Rezyklat aus duroplastischen Werkstoffen, umfassend die Verfahrensschritte:
Bereitstellen zu rezyklierender duroplastischer Ausgangswerkstoffe; Brechen der duroplastischen Ausgangswerkstoffe mit einem Zweiwellen-Zerkleinerer zum Erhalt einer Vielzahl von Bruchstücken; Zerkleinern der Bruchstücke mit einem Einwellen-Zerkleinerer zum Erhalt einer Vielzahl von Flocken; und Feinmahlen der Flocken mit einer Mahleinrichtung zum Erhalt eines Rezyklatpulvers.

## Beschreibung

Die vorliegende Erfindung betrifft ein Verfahren zur Gewinnung von Rezyklat aus duroplastischen Werkstoffen, wie insbesondere aus zu rezyklierenden duroplastischen Faserverbundbauteilen, als auch die Verwendung eines Rezyklatpulvers gewonnen aus duroplastischen Werkstoffen, wie insbesondere aus zu rezyklierenden duroplastischen Faserverbundbauteilen, als Füllstoff für die Herstellung eines duroplastischen Faserverbundhalbzeuges oder als Alternativfüllstoff für die Kunststoffindustrie sowie in weiteren Bereichen.

Aus dem Stand der Technik sind bereits Vorrichtungen und Verfahren zur Gewinnung von Füllstoffen aus Rezyklatbestandteilen bzw. aus wiederverwendeten Duroplasten bzw. duroplastischen Faserverbundbauteilen bekannt geworden. Nachteilig an den Verfahren und Vorrichtungen aus dem Stand der Technik ist, dass diese kein einheitliches und somit homogenes Rezyklat mit einem durchschnittlichen Partikeldurchmesser im Bereich kleiner als 100 µm erzeugen können und es somit in der praktischen Anwendung des Rezyklats in der Herstellung von duroplastischen Kunststoffen, wie insbesondere der Herstellung von duroplastischen Faserverbundwerkstoffen, zu Ausfällen im Herstellungsprozess kommt.

Diese Ausfälle können Folienrisse aufgrund von scharfkantigen Partikeln im Sheet Molding Compound (SMC) Herstellungsprozess oder Fehlstellen in den hergestellten Formteilen sein, welche zu einer Minderung der mechanischen Eigenschaften führen (Kerbminderungseffekt). Außerdem ist es aufgrund der inhomogenen Rezyklatpartikel gemäß Stand der Technik nicht möglich, Formteile im Class A-Bereich herzustellen. Aufgrund dieser Nachteile konnte die Kreislaufwirtschaft im Bereich der duroplastischen Kunststoffe bisher nicht implementiert werden.

Ausgehend von den vorbezeichneten Nachteilen des Standes der Technik stellt sich die vorliegende Erfindung die Aufgabe, ein verbessertes Verfahren zur Gewinnung von Rezyklat aus duroplastischen Ausgangswerkstoffen, wie insbesondere aus duroplastischen Faserverbundwerkstoffen, bereitzustellen, welches als Substitutionsbestandteil für einen mineralischen Füllstoff im Rahmen der Neuherstellung eines Kunststoffes, wie insbesondere eines thermoplastischen oder duroplastischen Kunststoffes oder insbesondere eines Faserverbundhalbwerkzeugs mit duroplastischer oder thermoplastischer Matrix, genutzt werden kann, welches bevorzugt wiederum als Class A-Bauteil Verwendung finden kann.

Gemäß einem ersten Aspekt wird die vorbezeichnete Aufgabe gelöst durch ein Verfahren zur Gewinnung von Rezyklat aus duroplastischen Ausgangswerkstoffen. Das erfindungsgemäße Verfahren umfasst die Verfahrensschritte:
A) Bereitstellen zu rezyklierender duroplastischer Ausgangswerkstoffe;
B) Brechen der duroplastischen Ausgangswerkstoffe aus Verfahrensschritt A) mit einem Zweiwellen-Zerkleinerer zum Erhalt einer Vielzahl von Bruchstücken;
C) Zerkleinern der Bruchstücke aus Verfahrensschritt B) mit einem Einwellen-Zerkleinerer zum Erhalt einer Vielzahl von Flocken; und
D) Feinmahlen der Flocken aus Verfahrensschritt C) mit einer Mahleinrichtung zum Erhalt eines Rezyklatpulvers.

Besonders bevorzugt kann vorgesehen werden, dass im Verfahrensschritt A) als zu rezyklierender duroplastischer Ausgangswerkstoff duroplastische Faserverbundbauteile bereitgestellt werden.

Bei den Faserverbundteilen kann es sich insbesondere um Faserverbundformteile handeln. Die Faserverbundbauteile umfassen bevorzugt Glasfasern, welche in einem ausgehärteten duroplastischen Matrixwerkstoff eingebettet vorliegen. Die Quellen der zu rezyklierenden duroplastischen Faserverbundbauteile können aus unterschiedlichen Bereichen stammen, beispielsweise können SMC-Formteile aus dem Boot- und Schiffsbau, Rotorblätter von Windkraftanlagen oder weitere Faserverbundformteile als Ausgangsstoff dienen, welche nunmehr einer Rezyklierung bzw. einem Recycling zugeführt werden sollen.

Im Rahmen der vorliegenden Erfindung sollen unter dem Begriff der zu rezyklierenden Ausgangswerkstoffe somit jegliche Werkstoffe, Werkstoffgemische bzw. auch Bauteile verstanden werden, welche zumindest einen duroplastischen Kunststoff und bevorzugt Verstärkungsfasern, wie besonders bevorzugt Glasfasern, umfassen, welche in einen duroplastischen Kunststoff eingebettet vorliegen. Bei den zu rezyklierenden Ausgangswerkstoffen handelt es sich beispielsweise um Abfallprodukte, welche während einer Neuteilproduktion beispielsweise von Faserverbundbauteilen als Überschussabschnitte etc. anfallen. Allerdings können im Rahmen des vorliegenden Verfahrens auch alte Faserverbundbauteile oder duroplastische Bauteile genutzt werden, welche durch Alterung oder Zerstörung nicht mehr für die intendierte Funktion genutzt werden können und folglich eigentlich entsorgt werden müssten und nunmehr nachhaltig in dem erfindungsgemäßen Verfahren zur Rezyklatgewinnung zu einem Ausgangswerkstoff für die Herstellung von neuen duroplastischen Bauteilen genutzt werden können.

Der Begriff der Flocken soll im Rahmen der vorliegenden Erfindung synonym für den englischsprachigen Begriff der "Flakes" verwendet werden. Bei den Flocken bzw. Flakes kann es sich um einen kleinen dünnen Gegenstand handeln, welcher spröde vorliegen kann, aber auch eine gewisse Duktilität aufweisen kann.

Es kann vorgesehen werden, dass die duroplastischen Ausgangswerkstoffe, wie insbesondere die Faserverbundformteile im Verfahrensschritt B), auf Bruchstücke mit einer durchschnittlichen Kantenlänge im Bereich von 5 cm bis 20 cm gebrochen werden.

Weiterhin kann es bevorzugt vorgesehen werden, dass im Verfahrensschritt C) die Bruchstücke in Flocken mit einer durchschnittlichen Kantenlänge im Bereich von 1 bis 5 cm, besonders bevorzugt von 2,5 cm, Kantenlänge zerkleinert werden.

Es kann vorgesehen werden, die Bruchstücke im Verfahrensschritt C) unter Verwendung einer Schneidmühle, eines Einwellenzerkleinerers und/oder einer Hammermühle zu zerkleinern. Erfindungsgemäß kann auch eine Kombination der vorbezeichneten Vorrichtungen zur Zerkleinerung verwendet werden.

Im Verfahrensschritt D) können die Flocken unter Verwendung einer Prallstrommühle und/oder einer Kugelmühle in das Rezyklatpulver feingemahlen werden. Die Flocken können dabei mit einem Durchsatz im Bereich von 100 kg/h bis 1000 kg/h unter Verwendung der Prallstrommühle oder Kugelmühle in das Rezyklatpulver feingemahlen werden.

Insbesondere kann es vorgesehen werden, dass die Flocken unter Verwendung einer Kryogen-Kühlschnecke unter kontinuierlicher Zugabe von Stickstoff feingemahlen werden. Die Verwendung einer Kryogen-Kühlschnecke unter kontinuierlicher Zugabe von Stickstoff stellt sich als besonders vorteilhaft dar, wenn duktile Flocken feingemahlen werden sollen.

Es kann vorgesehen werden, dass die Flocken im Verfahrensschritt D) auf eine durchschnittliche Korngröße/Partikelgröße kleiner als 100 µm feingemahlen werden.

Insbesondere kann es vorgesehen werden, dass im Verfahrensschritt A) als duroplastische Ausgangswerkstoffe duroplastische Faserverbundbauteile als Sheet Molding Compound (SMC)-Teile bereitgestellt werden.

Besonders vorteilhaft kann es vorgesehen werden, dass vor dem Verfahrensschritt A) ein weiterer Verfahrensschritt A0) vorgesehen wird, wobei unausgehärtete oder unvollständig ausgehärtete Faserverbundhalbzeuge bereitgestellt werden und anschließend ein Härten der unausgehärteten Faserverbundhalbzeuge erfolgt zum Erhalt von zu rezyklierenden Faserverbundteilen als duroplastische Ausgangswerkstoffe für Verfahrensschritt A).

Es kann vorgesehen werden, dass im Verfahrensschritt A0) die unausgehärteten Faserverbundhalbzeuge flächig unter einer elektromagnetischen Strahlungsquelle positioniert werden und mit einer elektromagnetischen Strahlung im Wellenlängenbereich von 780 nm bis 1 mm beaufschlagt werden zur Aufheizung der Faserverbundhalbzeuge, bevorzugt auf eine Oberflächentemperatur im Bereich von 150 °C bis 250 °C.

Der somit ausgehärtete SMC-Werkstoff kann anschließend analog der vernetzten duroplastischen Formteile bzw. duroplastischen Ausgangswerkstoffe zerkleinert und feingemahlen werden. Der vorbezeichnete Vorgang weist den Vorteil auf, dass eine aufwändige und CO₂-intensive Entsorgung der unvernetzten duroplastischen Werkstoffe entfallen kann und die so gehärteten duroplastischen Formteile wiederum der Rezyklierung zugeführt werden können.

Alternativ kann es vorgesehen werden, dass im Verfahrensschritt A0) die unausgehärteten Faserverbundhalbzeuge in einen Temperofen eingebracht werden und im Temperofen mit einer Temperatur im Bereich von 80 °C bis 200 °C beaufschlagt werden und die Faserverbundhalbzeuge über eine Zeitdauer im Bereich von 15 bis 360 Minuten im Temperofen ausgehärtet werden.

Die somit ausgehärteten SMC-Werkstoffe können anschließend analog der vernetzt vorliegenden duroplastischen Faserverbundformteile bzw. der duroplastischen Ausgangswerkstoffe zerkleinert und feingemahlen werden, wodurch wiederum eine aufwändige, kostspielige und CO₂-intensive Entsorgung der unausgehärteten SMC-Werkstoffe vermieden werden kann und diese der Rezyklierung als Füllstoffersatz zugeführt werden können.

Gemäß einem weiteren nicht erfindungsgemäßen Aspekt wird ein Herstellungsverfahren für ein duroplastisches Faserverbundhalbzeug beschrieben umfassend die Verfahrensschritte:
A) Bereitstellen der Rezepturbestandteile zur Herstellung eines duroplastischen Matrixwerkstoffs für Faserverbundhalbzeuge umfassend ein Füllstoffgemisch und einen duroplastischen Reaktionsharz, wobei das Füllstoffgemisch zumindest Rezyklatpulver aus rezyklierten duroplastischen Ausgangswerkstoffen, wie insbesondere Faserverbundwerkstoffen, umfasst, bevorzugt erhalten über ein Verfahren gemäß dem ersten Aspekt der Erfindung in einem Gewichtsverhältnis von 1 % bis 40 % des Gesamtgewichts des Füllstoffgemischs;
B) Fördern der Rezepturbestandteile aus Schritt A) umfassend das Füllstoffgemisch und das Reaktionsharz mit Hilfe mindestens einer Dosiereinrichtung in einen Dissolver;
C) Vermischen der Rezepturbestandteile unter Verwendung einer Dissolverscheibe und/oder einer Doppelsogzahnscheibe im Dissolverprozess zum Erhalt eines homogenen Harz-Füllstoffgemischs umfassend das Rezyklatpulver;
D) Aufrakeln des Harz-Füllstoffgemisches aus Schritt C) auf einer co-extrudierten Schleppfolie, wobei die Zugabe des Harz-Füllstoff-Gemisches auf die Schleppfolie über einen Rakelkasten erfolgt;
E) Beaufschlagen des auf die Schleppfolie aufgerakelten Harz-Füllstoffgemischs mit Schnittfasern, Fasergeweben, Fasergelegen aus Glasfaser oder alternativen Fasertypen wie Kohlenstofffasern oder Naturfasern zum Erhalt eines Faser-Harz-Füllstoffhalbzeugs; und
F) Walken des Faser-Harz-Füllstoffhalbzeuges zum Erhalt eines Halbzeugs, wobei die Fasern mit dem Reaktionsharz und dem Rezyklatpulver gleichmäßig umschlossen sind.

Durch die Rezyklatzugabe kann eine Erhöhung der mechanischen Eigenschaften der Matrix erreicht werden. Hierdurch ist wiederum eine Erhöhung der mechanischen Eigenschaften der hergestellten Faserverbundformteile möglich, im Zuge dessen eine Zugabe an Glasfasern reduziert werden kann.

Das Füllstoffgemisch im Verfahrensschritt A) kann zusätzlich zu dem Rezyklatpulver unter anderem folgende sonstige Rezepturbestandteile enthalten: ungesättigte Polyester-(UP)- Harze, Vinylester-(VE)- Harze, ungesättigte Hybridharze, Styrol, Vinyltoloul, Thermoplastlösungen, Calciumcarbonat als Füllstoff, sowie Peroxide, Inhibitoren, Netz- und Dispergieradditive und Pigmente.

Gemäß einem weiteren nicht erfindungsgemäßen Aspekt wird ein Herstellungsverfahren für ein Class A-Faserverbundformteil beschrieben umfassend die Verfahrensschritte gemäß dem zweiten Aspekt der vorliegenden Erfindung sowie weiterhin umfassend die Verfahrensschritte:
G) Verpressen des Halbzeuges aus Schritt F) zum Erhalt eines Faserverbundformteils;
H) Aufbringen einer In-Mould-Coating-Schicht im Pressprozess mit anschließender oder direkter Lackierung; und
I) Aushärten des Faserverbundformteils.

Gemäß einem zweiten Aspekt betrifft die vorliegende Erfindung die Verwendung eines Rezyklatpulvers, erhalten über ein Verfahren gemäß dem ersten Aspekt der vorliegenden Erfindung als Füllstoff für die Herstellung eines duroplastischen oder eines thermoplastischen Faserverbundhalbzeugs, insbesondere zur Herstellung eines Class A-Faserverbundbauteils.

Gemäß einem dritten Aspekt betrifft die Erfindung die Verwendung eines Rezyklatpulvers, erhalten über ein Verfahren gemäß dem ersten Aspekt der vorliegenden Erfindung als Alternativfüllstoff für die Kunststoffindustrie sowie in weiteren Bereichen.

Alternativ kann das Rezyklatpulver in weiteren Bereichen zur Substitution von mineralischen Füllstoffen eingesetzt werden, beispielsweise kann das Rezyklatpulver im thermoplastischen Kunststoffbereich (Extrusion, Spritzguss oder im Tiefziehbereich) verwendet werden.

Durch die erfindungsgemäße Verwendung des Rezyklatpulvers im Bereich der Herstellung der Kunststoffe kann eine Reduktion der CO₂-Bilanz durch Zugabe des gewonnen Rezyklats im Hinblick auf die Substitution von mineralischen Füllstoffen sowie des Entfalls der Entsorgung der rezyklierten duroplastischen Kunststoffe bzw. Faserverbundwerkstoffe erreicht werden. Die Erfindung ermöglicht somit vorteilhaft eine Reduktion von natürlichen Ressourcen (mineralische Füllstoffe) durch den Einsatz des gewonnenen Rezyklats. Das Rezyklat benötigt weiterhin keine Vernetzungshilfen bei Verwendung mit reaktiven Harzsystemen wie z.B. UP-Harzen.

## Patentansprüche

1. Verfahren zur Gewinnung von Rezyklat aus duroplastischen Werkstoffen, umfassend die Verfahrensschritte:
A) Bereitstellen zu rezyklierender duroplastischer Ausgangswerkstoffe;
B) Brechen der duroplastischen Ausgangswerkstoffe aus Verfahrensschritt A) mit einem Zweiwellen-Zerkleinerer zum Erhalt einer Vielzahl von Bruchstücken;
C) Zerkleinern der Bruchstücke aus Verfahrensschritt B) mit einem Einwellen-Zerkleinerer zum Erhalt einer Vielzahl von Flocken; und
D) Feinmahlen der Flocken aus Verfahrensschritt C) mit einer Mahleinrichtung zum Erhalt eines Rezyklatpulvers.

2. Verfahren nach Anspruch 1, wobei im Verfahrensschritt A) duroplastische Faserverbundbauteile als zu rezyklierender duroplastischer Ausgangswerkstoff bereitgestellt werden.

3. Verfahren nach Anspruch 1 oder 2, wobei die duroplastischen Ausgangswerkstoffe im Verfahrensschritt B) auf Bruchstücke mit einer Kantenlänge im Bereich von 5 cm bis 20 cm gebrochen werden.

4. Verfahren nach einem der Ansprüche 1 bis 3, wobei im Verfahrensschritt C) die Bruchstücke in Flocken mit einer Kantenlänge im Bereich von 1 cm bis 5 cm zerkleinert werden.

5. Verfahren nach einem der vorausgehenden Ansprüche, wobei die Bruchstücke im Verfahrensschritt C) unter Verwendung einer Schneidmühle, eines EinwellenZerkleinerers und/oder einer Hammermühle zerkleinert werden.

6. Verfahren nach einem der vorausgehenden Ansprüche, wobei im Verfahrensschritt D) die Flocken unter Verwendung einer Prallstrommühle und/oder Kugelmühle in das Rezyklatpulver feingemahlen werden.

7. Verfahren nach Anspruch 6, wobei die Flocken mit einem Durchsatz im Bereich von 100 kg/h - 1.000 kg/h unter Verwendung der Prallstrommühle und/oder Kugelmühle in das Rezyklatpulver feingemahlen werden.

8. Verfahren nach Anspruch 6 oder 7, wobei die Flocken unter Verwendung einer Kryogenkühlschnecke unter kontinuierlicher Zugabe von Stickstoff feingemahlen werden.

9. Verfahren nach einem der vorausgehenden Ansprüche, wobei im Verfahrensschritt D) die Flocken auf eine Korngröße im Bereich kleiner als 100 µm feingemahlen werden.

10. Verfahren nach einem der vorausgehenden Ansprüche, wobei im Verfahrensschritt A) als duroplastische Ausgangswerkstoffe duroplastische Faserverbundteile als Sheet Molding Compound (SMC)-Teile bereitgestellt werden.

11. Verfahren nach einem der vorausgehenden Ansprüche, wobei das Verfahren vor dem Verfahrensschritt A) den zusätzlichen Verfahrensschritt umfasst:
A0) Bereitstellen unausgehärteter oder unvollständig ausgehärter Faserverbundhalbzeuge und Aushärten der unausgehärteten Faserverbundhalbzeuge zum Erhalt von zu rezyklierender Faserverbundteile zur Verwendung als duroplastische Ausgangswerkstoffe für Verfahrensschritt A).

12. Verfahren nach Anspruch 11, wobei im Verfahrensschritt A0) die unausgehärteten Faserverbundhalbzeuge flächig unter einer elektromagnetischen Strahlungsquelle positioniert werden und mit einer elektromagnetischen Strahlung im Wellenlängenbereich von 780 nm bis 1 mm beaufschlagt werden zur Aufheizung der Faserverbundhalbzeuge, bevorzugt auf eine Oberflächentemperatur im Bereich von 150°C bis 250°C.

13. Verfahren nach Anspruch 11, wobei im Verfahrensschritt A0) die unausgehärteten Faserverbundhalbzeuge in einen Temperofen eingebracht und im Temperofen eine Temperatur im Bereich von 80°C bis 200°C erzeugt wird und die Faserverbundhalbzeuge über eine Zeitdauer von 15 - 360 Minuten im Temperofen ausgehärtet werden.

14. Verwendung eines Rezyklatpulvers, erhalten über ein Verfahren gemäß einem der Ansprüche 1 bis 13 als Füllstoff für die Herstellung eines duroplastischen Faserverbundhalbzeugs.

15. Verwendung eines Rezyklatpulvers, erhalten über ein Verfahren gemäß einem der Ansprüche 1 bis 13 zur Substitution von mineralischen Füllstoffen im thermoplastischen oder duroplastischen Kunststoffbereich oder als Alternativfüllstoff in weiteren Bereichen.
